# EUROPEAN PATENT APPLICATION

(11) **EP 3 293 416 A1**
(43) Date of publication of application: **14.03.2018**
(21) Application number: 17196221.0
(22) Date of filing: 03.09.2013
(51) Int. Cl.: F16H 3/00, F16H 3/083, F16H 63/18, F16H 63/30

(54) **GEARBOX**

(30) Priority: 07.09.2012 IT MI20121493
(62) Divisional of application: 13803198.4
(71) Applicant: Trivelli, Aroldo, 20900 Monza (IT)
(72) Inventor: Trivelli, Aroldo, 20900 Monza (IT)
(74) Representative: De Bonis, Paolo

(57) **Abstract**

A gearbox with reduced encumbrance, comprising a primary shaft (12) carrying primary gearings (30, 31, 32, 33, 34, 35), a secondary shaft (36) parallel to a primary shaft (12) which carries secondary gearings (37, 38, 39) of odd-number gears and secondary gearings (40, 41, 42) of even-number gears which can be activated in engagement with the primary gearings of the primary shaft (12) by means of a cam shaft (43) coaxial with the secondary shaft (36), carrying cams (54, 55, 56, 57, 58, 59), spaced axially and angularly offset in a helical fashion with respect to each other, by an angle a, so as to be brought one at a time in correspondence with the secondary gearings of the secondary shaft which follows the rotation of the cam shaft, rotation means (29, 50) of the cam shaft being envisaged with respect to said secondary shaft, and also means for the selective engagement (51, 52, 53, 49) between primary gearings and secondary gearings with the controlled rotation of the cam shaft with respect to the secondary shaft, the engagement means consisting of barrels (52) slidingly positioned in openings (51), angularly offset in a helical fashion with respect to each other in hollow side walls of the secondary shaft in a complementary position with respect to that of the cams, each secondary gear comprising at least one seat (49) for receiving a barrel (52) when raised. Each of said cams (54, 55, 56, 57, 58, 59) has a rounded shape at the top and has the shape of a rounded inflection laterally filleted at both sides with respect to an outer surface of the cam shaft (43) from which they extend.

## Description

The present invention relates to a gearbox with reduced encumbrance.

At present, in the field of gearboxes for motor vehicles, there is a vast variety of solutions which, although functioning excellently, also have various drawbacks.

A first drawback is that relating to the construction complexity, as they must comprise a whole series of gearshift forks, sliding rods, sliding sleeves, seats, couplings, complex groups for moving the forks, etc., only to mention a few of the components currently and most frequently used.

One of these construction complexities, in addition to requiring investments for the production of the various gearshift elements and elements correlated with these, also relates to the time necessary for the assembly and setup of a complex correlation between the parts in question.

It should also be noted, for example, that the presence of forks in the gearbox creates restrictions relating to perfect orthogonality with respect to the axis of the shafts.

Otherwise, and this is frequently the case, losses are created due to friction between the side walls and seat of the corresponding sliding sleeves. As a result, there is an immediate loss in the potential performance of the gearshift.

It should also be observed that the presence of couplings of the sliding sleeves and corresponding gears creates a significant axial encumbrance.

This larger encumbrance mainly occurs when there is a "dual clutch" group which, when added to the encumbrances of the gearbox itself, create an excessive encumbrance of the gearshift-clutch group.

It has also been observed in known groups of this type that there is not always the gearshift rapidity that may be necessary.

In particular, the problem may arise in the case of a rapid and brusque gear change, due to road or traffic conditions. In this case, in fact, the insertion of the ratio may be required, which would not normally be envisaged.

The natural consequence is that resort must be made to a rapid downshift which in any case implies fixed minimum times. In particular, this necessity is mainly required on motorcycles, for example due to the sporty driving style of the users. In a mixed route, for example, a downshift is often required on bends which creates a certain difficulty.

A rapid and unexpected downshift may also be necessary in motor vehicles, especially under emergency conditions.

At present, this is complicated and difficult to effect.

A general objective of the present invention is to solve the drawbacks of the known art described above in an extremely simple, economical and particularly functional way.

A further objective of the present invention is to provide a gearbox which eliminates the whole series of forks, sliding rods, sliding sleeves, seats and gear couplings, "desmodromic" drum for shifting the forks, and other elements present in normal gearboxes.

Another objective of the present invention is to provide a gearbox which has an extreme axial compactness with respect to existing gearboxes.

Yet another objective of the present invention is to provide a gearbox which is as smooth-sliding as possible, eliminating or in any case minimizing any friction between the parts, and which has a maximum efficiency.

A further objective of the present invention is to provide a gearbox which is mechanically extremely simple and functional.

In view of the above objectives, according to the present invention, a gearbox with a reduced encumbrance has been conceived, having the characteristics specified in the enclosed claims.

The structural and functional characteristics of the present invention and its advantages with respect to the known art will appear even more evident from the following description referring to the enclosed drawings, which show some embodiments of a gearbox with a reduced encumbrance produced according to the invention integrated or not integrated with a single or dual clutch.

In the drawings:
- figure 1 is a longitudinal sectional schematic view of a first embodiment of a gearbox with a reduced encumbrance not in accordance with the invention in neutral position in the case of coupling with a dual clutch;
- figure 2 is a block scheme which shows the management of the gearbox of figure 1;
- figure 3 is a raised side view of a secondary shaft, cam shaft and relative coupling hub of the various ratios belonging to the gearbox of figure 1 of the invention;
- figure 4 is a longitudinal sectional schematic view of a secondary shaft, cam shaft and coupling hub according to the line IV-IV of figure 3;
- figure 5 is a transversal section in correspondence with the line V-V of figure 3;
- figure 5A is an enlarged sectional view of a coupling detail between a cam and a barrel in a reciprocal coupling phase;
- figure 6 is a longitudinal sectional schematic view similar to that shown in figure 1 in which the first gear is inserted and the second gear ready to be inserted;
- figures 7 and 8 show transversal sections situated on the section of figure 6 in correspondence with the first gear inserted and the second gear ready to be inserted, respectively;
- figure 9 is a longitudinal sectional schematic view similar to that shown in figure 1 in which the second gear is inserted and the first and third gears are ready to be inserted;
- figure 10 shows a transversal section situated on the section of figure 9 respectively, in correspondence with the second gear inserted;
- figures 11 and 12 show transversal sections situated on the section of figure 9 in correspondence with the first gear and third gear ready to be inserted, respectively;
- figure 13 is a longitudinal sectional schematic view of a second embodiment of a gearbox with a reduced encumbrance produced according to the invention in neutral position in the case of coupling with a single clutch;
- figure 14 is a block scheme which shows the management of the gearbox of the invention in the embodiment of figure 13;
- figure 15 is a longitudinal sectional schematic view similar to that shown in figure 13 in which the first gear is inserted and the second gear is ready to be inserted;
- figures 16 and 17 show transversal sections situated on the section of figure 15 in correspondence with the first gear inserted and the second gear ready to be inserted, respectively;
- figure 18 is a longitudinal sectional schematic view similar to that shown in figure 13 in which the second gear is inserted and the first and third gears are ready to be inserted;
- figure 19 shows a transversal section situated on the section of figure 18 in correspondence with the second gear inserted;
- figures 20 and 21 show transversal sections situated on the section of figure 18 in correspondence with the first gear and third gear ready to be inserted, respectively.

With reference to the figures, these show a gearbox group with a reduced encumbrance according to the present invention associated with a dual clutch in one of its complex embodiments.

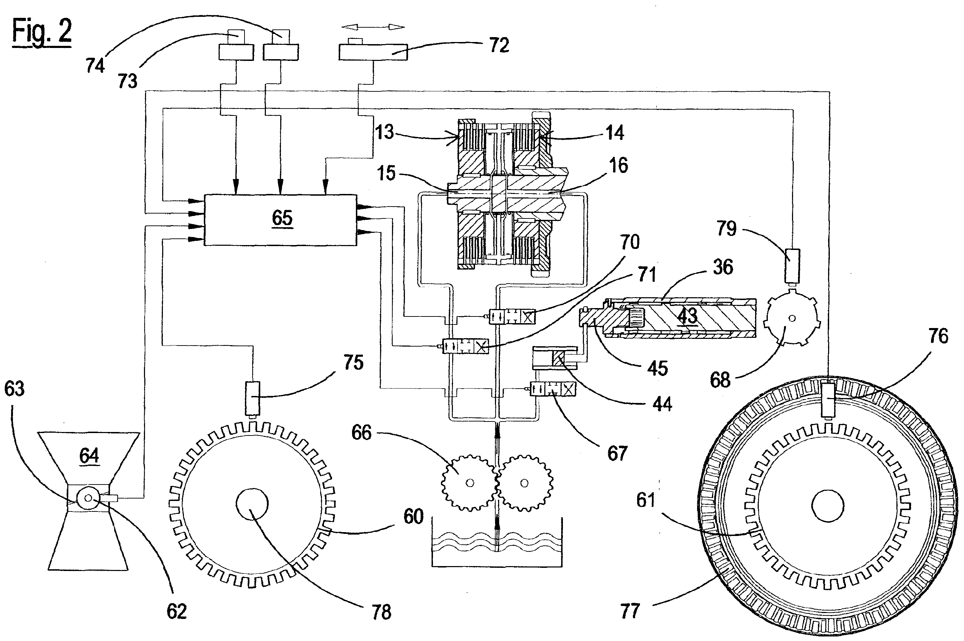

The gearbox comprises a pair of primary shafts 11, 12, positioned coaxially with respect to each other. Each of these primary shafts 11, 12, is integral with a respective clutch 13, 14, also coaxial with the primary shafts 11, 12, situated in correspondence with an end of the respective primary shaft 11, 12. Each clutch 13, 14, can be independently actuated by means of a respective oil duct 15, 16. More specifically, a first duct 15, positioned axially and radially in the first primary shaft 11, creates a flow of the oil partly axially and partly radially towards a chamber 17 in which a respective pressure plate 18 is positioned. In an equivalently specular way, a second duct 16, also positioned axially and radially in the first primary shaft 11, creates a flow of the oil partly axially and partly radially towards a chamber 19 in which a respective pressure plate 20 is positioned. The pressure plates 18, 20 are moved axially by the pressure of the oil coming from the two separate channels 15, 16, as already mentioned, situated inside the innermost 11 of the two primary shafts 11, 12. In this way, the pressure plates 18, 20 selectively control the compacting of two series of drive plates 21, 22, integral with an outer bell 23, coaxial and integral in turn with a transmission gear 24. This transmission gear 24 receives the rotation movement by means of a pinion (not shown) which is integral and coaxial with the crankshaft 78 (figure 2).

In this way, the movement of the thermal group reaches the transmission.

Two series of driven plates 25, 26, suitable for collaborating with the two series of drive plates 21, 22, with respect to which they are interposed, are constrained to two hubs 27, 28, in turn constrained with respect to the corresponding primary shafts 11, 12.

The passage of the oil respectively into one of the two ducts 15 or 16 therefore causes the alternating movement of the pressure plate 18 or 20. Through the pressure of the oil, the pressure plate 18 or 20 causes an axial thrust on one of the two series of drive plates and driven plates 21, 25 or 22, 26 allowing the torque to be transferred, through friction, to one of the two primary shafts 11, 12.

The first primary shaft 11, actuated in rotation by the clutch 13 (odd-number gear clutch), carries primary gearings 30, 31, 32 of odd-number gears (first, third and fifth) and the second primary shaft 12, actuated in rotation by the clutch 14 (odd-number gear clutch), carries primary gearings 33, 34, 35 of even-number gears (second, fourth and sixth).

Furthermore, according to the invention, there is also a secondary shaft 36, positioned parallel to the two primary shafts 11, 12, which carries the whole series of secondary gearings 37, 38 and 39 of odd-number gears and 40, 41 and 42 of even-number gears. These secondary gearings 37, 38 and 39 of odd-number gears and 40, 41 and 42 of even-number gears can be activated in engagement with the respective primary gearings 30, 31, 32 of odd-number gears and 33, 34, 35 of even-number gears of the two primary shafts 11, 12 by means of a particular cam shaft 43.

This cam shaft 43 is positioned coaxially with respect to the above secondary shaft 36, which is hollow, and carries surface cams 54, 55, 56, 57, 58, 59, at least one for each odd-number gear and even-number gear, angularly offset in a helical fashion with respect to each other. In the illustrative and non-limiting example shown in the figures, there are three surface cams 54, 55, 56, 57, 58, 59, for each odd-number gear and for each even-number gear, they are positioned on the same transversal plane and are spaced perimetrically on the plane at 120° from each other. In any case, the single surface cams of each different gear are spaced axially and angularly offset with respect to each other, by an angle α, in the example by 15°. This arrangement allows the cams of only one gear at a time to be brought in correspondence with one of the secondary gearings 37, 38 and 39 of odd-number gears and 40, 41 and 42 of even-number gears, situated on the secondary shaft 36.

More specifically, it should be noted that both the cam shaft 43 and the secondary shaft 36 rotate coaxially.

An actuator 44, in the example shown in its end part in the form of an insertion fork of the ratios, is constrained and controls an extension or hub 45, that can be moved forwards and backwards according to the arrow 46. At one of its ends, the hub 45 externally has a male grooved profile 47 to be engaged with a complementary female grooved profile 48 situated internally and coaxially with an end of the cam shaft 43.

This type of coupling allows the cam shaft 43 to be rotatingly entrained, at the same time allowing the hub to move axially.

Furthermore, in the secondary shaft 36 there is at least one helicoidal groove 29, in which at least one roll 50 slides, radially fixed in the hub 45 which acts as extension of the actuator 44. In the example, there are three grooves 29 and rolls 50, positioned at 120° with respect to each other. The axial movement and contemporaneous rotation of the hub 45, according to the law imposed by the profile of the helicoidal grooves 29, causes the relative rotation between the cam shaft 43 and secondary shaft 36. The grooves 29 and rolls 50 form rotation means of the cam shaft 43 with respect to the secondary shaft 36.

It should also be noted that in the secondary shaft 36, which is hollow, there is a whole series of radial openings 51 containing the same quantity of barrels 52 and which are axially spaced and angularly offset in a helical fashion with respect to each other so as to be aligned with the surface cams 54, 55, 56, 57, 58, 59. The openings 51 are situated in hollow side walls of the secondary shaft 36 in a complementary position with respect to that of the surface cams 54, 55, 56, 57, 58, 59 situated on the cam shaft 43 which actuate the radial sliding of the barrels 52.

Said barrels 52, which can be translated inside the respective radial openings 51, are moved to be lifted from the respective surface cams 54, 55, 56, 57, 58, 59, brought by the cam shaft 43 in correspondence with the openings 51. As shown in the embodiment of the figures, each barrel 52 has, at the rear, a radial rounded extension 53 facing the rotation axis of the cam shaft 43. The cam shaft 43 has a smaller external diameter than that inside the secondary shaft 36 so that it can freely rotate with its surface cams 54, 55, 56, 57, 58, 59, directed radially outwardly, inside an internal cavity of the secondary shaft 36. When one of the surface cams 54, 55, 56, 57, 58, 59, carried by the cam shaft 43 is in contact with an extension 53 of a barrel 52, it causes the translation of the same barrel 52 in the opening 51, raising it towards the outside. In this way, the barrel 52 is engaged in a complementary seat 49 (or housing) situated in the respective secondary gearing of the gear to be changed. Each secondary gearing 37, 38, 39, 40, 41, 42, in fact, comprises at least one seat 49 for receiving a respective barrel 52 when raised from the respective surface cam. In the example, it can be seen that there are three barrels 52, openings 51 and extensions 53, and also surface cams and seats 49, for each gear and for each secondary gearing of the same gear.

This is how the insertion of the various ratios, or gear, is effected by raising the barrels 52 moved by their radial shifting actuated by the surface cams 54, 55, 56, 57, 58, 59, carried by the cam shaft 43, which, as already indicated, is coaxial to the secondary shaft 36. The barrels 52, the openings 51, the extensions 53 and seats 49 form selective engagement means between the primary gearings 30, 31, 32 of odd-number gears and 33, 34, 35 of even-number gears situated on the primary shafts 11, 12 and the secondary gearings 37, 38 and 39 of odd-number gears and 40, 41 and 42 of even-number gears, situated on the secondary shaft 36, with the rotation of the cam shaft 43 with respect to the secondary shaft 36 driven by the actuator 44.

The cam shaft 43 obviously rotates together with the secondary shaft 36, but it must be able to have a rotation in both directions with respect to this in order to cause the raising of the barrels 52 of the desired gear necessary for the change.

In this way, through the axial shifting of the hub 45, the insertion of the various ratios is obtained and, as already indicated, the movement of the hub 45 is effected by means of the actuator which can be mechanical (as shown) or hydraulic (figure 2) or electric (not shown).

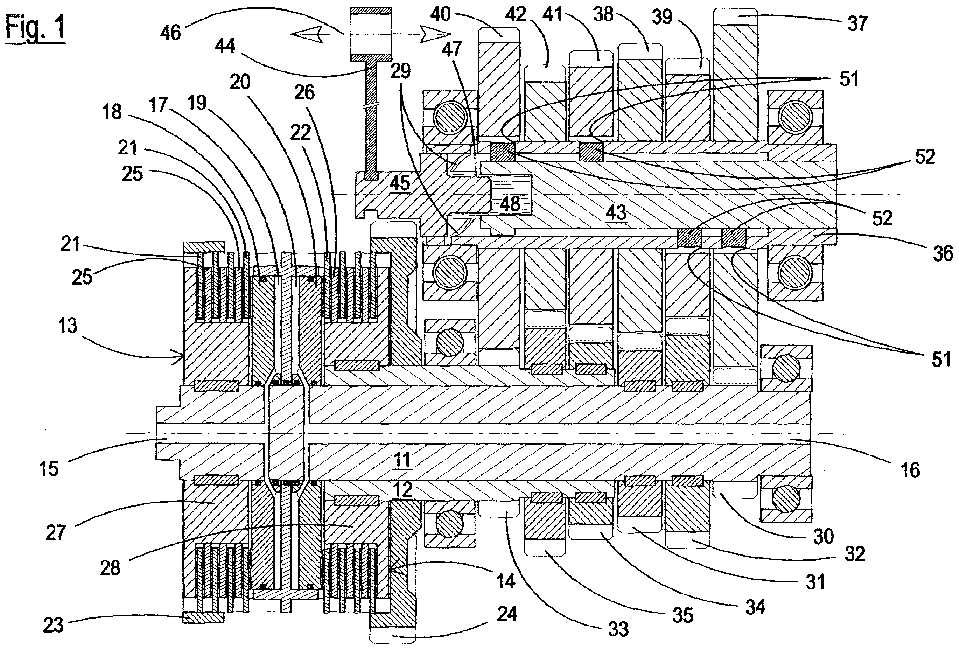

Figures 1 to 5 illustrate the characteristics of the gearbox of the invention in neutral position in the embodiment coupled with a dual clutch.

According to the present invention, a way has been conceived of overcoming the drawbacks of the known art described above, in which ratios inserted with sliding sleeves and gearshift forks are envisaged, by eliminating them so as to have extreme rapidity in the insertion of the gears.

It has been observed, in fact, that in the known gearboxes cited above, an obstacle for obtaining a more rapid gear-change lies in the fact that when a ratio is to be changed, it is necessary to pass through a "neutral" position. This derives from the fact that the previous or subsequent gear cannot be inserted until the ratio inserted has been completely released. Otherwise, two gears would be contemporaneously inserted and this would cause at least the breakage of the teeth of the gearing.

According to the present invention, an extremely rapid insertion is enabled, without the presence of forks and sleeves.

In the neutral arrangement of the present invention, illustrated in figure 1, it can be observed that the two primary shafts 11, 12 rotate integrally and coaxially with the hubs 27 and 28 of the two clutches 13 and 14.

It can also be seen that the primary gearings of the odd-number gears 30, 31 and 32 are assembled on the first primary shaft 11 and rotate integrally with it. The primary gearings 33, 34 and 35 of the even-number gears are assembled on the other primary shaft 12 and rotate integrally with it.

The secondary shaft 36 is also envisaged, wherein the secondary gearings 37, 38, 39, 40, 41 and 42 of the odd-number gears and even-number gears corresponding to the primary gearings 30, 31, 32, 33, 34 and 35 of the primary shaft 11, rotate coaxially and in neutral position.

It can also be seen that this secondary shaft 36 is hollow and carries the cam shaft 43 internally and coaxially to it. The cam shaft 43 has surface cams 54, 55, 56, 57, 58, 59, in the form of radially protruding rounded protuberances, on parallel planes and positioned in correspondence with the centre-line of the secondary gearings 37, 38, 39, 40, 41 and 42 of the odd-number gears and even-number gears, situated on the same secondary shaft 36.

It can also be observed that the secondary shaft 36 has radial openings 51, in the form of rectangular cavities, positioned radially on parallel planes and in correspondence with the centre-line of the secondary gearings 37, 38, 39, 40, 41 and 42 of the odd-number gears and even-number gears, situated on the same secondary shaft 36.

The barrels 52, which are bodies free to move radially in the secondary shaft 36 and which make the secondary gearing, corresponding to the gear selected, integral with the secondary shaft 36 itself, slide radially in these openings or cavities 51, allowing the transmission of the movement.

The barrels 52 are pushed radially outwards by the surface cams 54, 55, 56, 57, 58, 59, and are suitably positioned on the basis of the rotation of the cam shaft 43.

In rest position, the barrel 52 is practically in line with the outer surface of the secondary shaft 36 and with its contact part adjacent to the extension 53, adjacent to the surface cam itself. A minimum rotation of the cam shaft 43 is therefore sufficient for lifting the barrel 52 and allowing it to exit with engagement in the corresponding seat 49 of the respective secondary gearing and insertion of the desired ratio.

Having the barrels 52 of the secondary gearings relating to the previous and subsequent gears with respect to that inserted, allows a gear-change to be effected in an extremely short time.

In order to achieve this, however, there would be a contemporaneous insertion of two ratios: this is avoided thanks to the presence of the dual clutch 13, 14. Thanks to the intervention of the dual clutch 13, 14, in fact, the relative primary gearings on the primary shaft 11 of the two gears, which can be potentially subject to a possible subsequent insertion, are managed by the disengaged clutch, which enters into action at the moment in which the previous gear has been disengaged. The presence of the dual clutch 13, 14, in fact, allows the optimum functioning of the gearbox proposed and enhances its rapidity characteristics.

According to the present invention, the drawback of the insertion of the ratio not envisaged by the software is overcome as the choice of the ratio is decided at the moment of the specific driving necessity and the rapidity of the change makes it superfluous to have the ratio already inserted, as is the case in the known art.

Figure 2 shows, for illustrative and non-limiting purposes, one of the possible management systems of a gearbox according to the invention, coupled with a dual clutch.

In the example, the presence is envisaged of a control unit ECU 65 equipped with memory and relative microprocessor. At least two phonic wheels 61, 60 are also envisaged, assembled coaxially: a first phonic wheel 61 is positioned in correspondence with a driving wheel 77 and a second phonic wheel 60 in correspondence with a crankshaft 78.

These phonic wheels 61 and 60 have the specific purpose of revealing, by means of relative sensors (pick-ups) 76 and 75, the velocity of the vehicle and revs of the engine, respectively.

A potentiometer 62, for example of the rotational type, reveals the position of a throttle 63 of a throttleless body 64 or carburetor. Alternatively, in the case of a diesel cycle, a sensor (not shown) is present, which reveals the fuel supply to the injectors (also not shown). The potentiometer 62, together with the sensor or pick-up 75 of the phonic wheel 60 coaxial with the crankshaft 78, reveal the "load" on the engine. This "load" of the engine revealed enters the control unit 65 as Input together with the velocity of the vehicle, revealed by the sensor or pick-up 76 of the phonic wheel 61 coaxial with the driving wheel 77.

On the basis of the data entering the memory (so-called "mapping"), the control unit 65 selects the most suitable ratio during the movement of the vehicle.

In order to do this, there is the servo-assistance of a hydraulic circuit consisting of a high-pressure oil pump 66, for example of the type with gears, moved by the crankshaft 78.

At the appropriate moment, the control unit 65 decides, through an electrovalve 67 and a hydraulic cylinder (which in this case acts as actuator 44), the movement of the actuator 44 in one of the two directions of the arrow 46, causing the movement of the hub 45 which acts on the secondary shaft 36. In this way, the ratio selected is inserted.

A position sensor 68 (for example of the rotational type) reveals the ratio inserted, by means of a respective detector or pick-up 79, and acts at the input of the control unit 65, as a retroactive signal. The control unit 65, prior or subsequent to the insertion of the ratios, introduces or discharges oil, by means of the electrovalve 70, 71, through the ducts 15 or 16 on the group of dual clutches 13, 14 according to what is described above.

There is also the possibility of deactivating the automatic functioning managed by the control unit 65, by means of a selector 72, and acting manually with two buttons 73, 74 (for the upshift and downshift of the gears alternatively). It should be pointed out that the example illustrated describes a totally hydraulic type of management. Alternatively, there is the possibility of also using mechanical or electric actuators or mixed electrohydraulic or electromechanical systems.

Furthermore, the oil pressure, increasing with the revs of the engine, almost automatically, possibly with the help of proportional valves, effects a gradual and progressive insertion of the clutch in the starting phase.

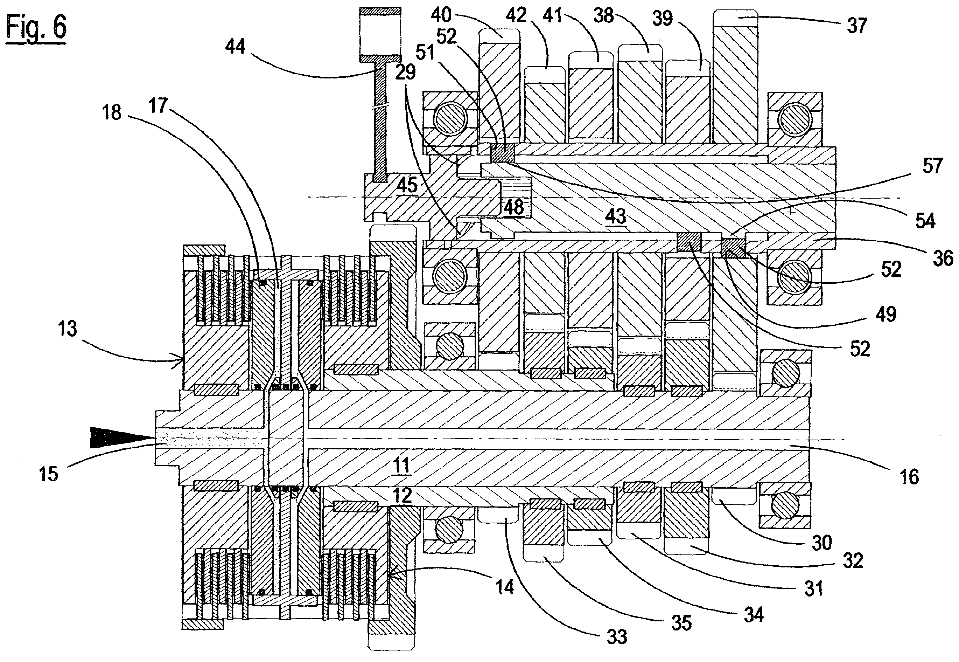

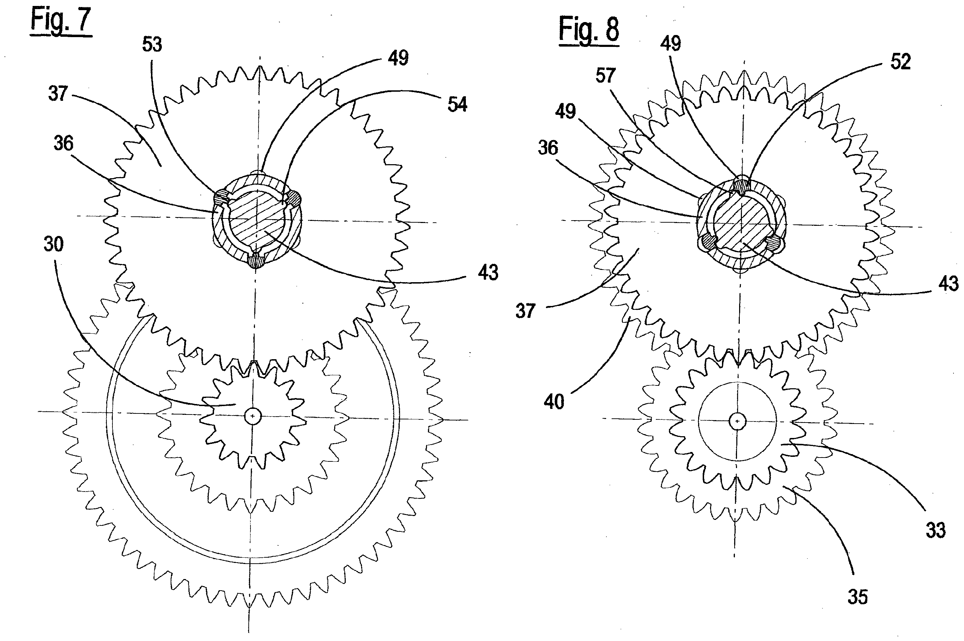

Figures 6 and 7 show the arrangement of the parts of the gearbox according to the invention in the dual clutch embodiment in the "first" gear position inserted in both a longitudinal and transversal section.

Figure 6 is a longitudinal sectional view of the odd-number gear clutch 13 inserted and the even-number gear clutch 14 disengaged. This is because pressurized oil has only been introduced into the duct 15, which has caused the shifting of the pressure plate 18. The pressure plate 18 moves, through the oil pressure, into the chamber 17 and causes an axial thrust on one of the two series of drive plates 21 and driven plates 25 allowing, by means of friction, the torque to be transferred to the primary shaft 11 with the insertion and activation of the odd-number gear clutch 13.

In this situation, the three barrels 52 relating to the insertion of the "first"-gear secondary gearing 37 on the secondary shaft 36 have been pushed outside their three openings 51 by the interaction of the three surface cams 54 of the cam shaft 43 which are engaged with the extensions 53.

This occurs thanks to the action of the actuator 44 which, by acting on the hub 45, moves it axially for as much as is necessary for causing the rotation of the secondary shaft 36. It should be remembered that this rotation is due to the interaction between the grooves 29 and rolls 50.

The lifting of the barrels 52 causes their engagement in the relative seats 49 of the secondary gearing 37 which thus becomes integral with the secondary shaft 36 and receives the movement from the primary gearing 30 positioned on the primary shaft 11 caused to rotate by the odd-number gear clutch 13. These barrels 52, inserted in the seats 49, are obviously kept in position by the "first"-gear surface cams 54.

It is obvious that in this case, however, there is only one gear ready for the potential subsequent insertion, i.e. the "second" gear. The "first" gear, in fact, does not have a previous gear.

Figure 8 shows a sectional view of how this is possible. It can be seen, in fact, that the barrels 52 of the "second"-gear secondary gearing 40 situated in the respective seats 51 of the secondary shaft 36 are ready to be raised with a minimum rotation of the cam shaft 43. The surface cams 57 of the cam shaft 43 are in fact alongside the extensions 53 of the barrels 52 positioned in the seats 51 of the secondary shaft 36 in correspondence with the "second"-gear secondary gearing 40.

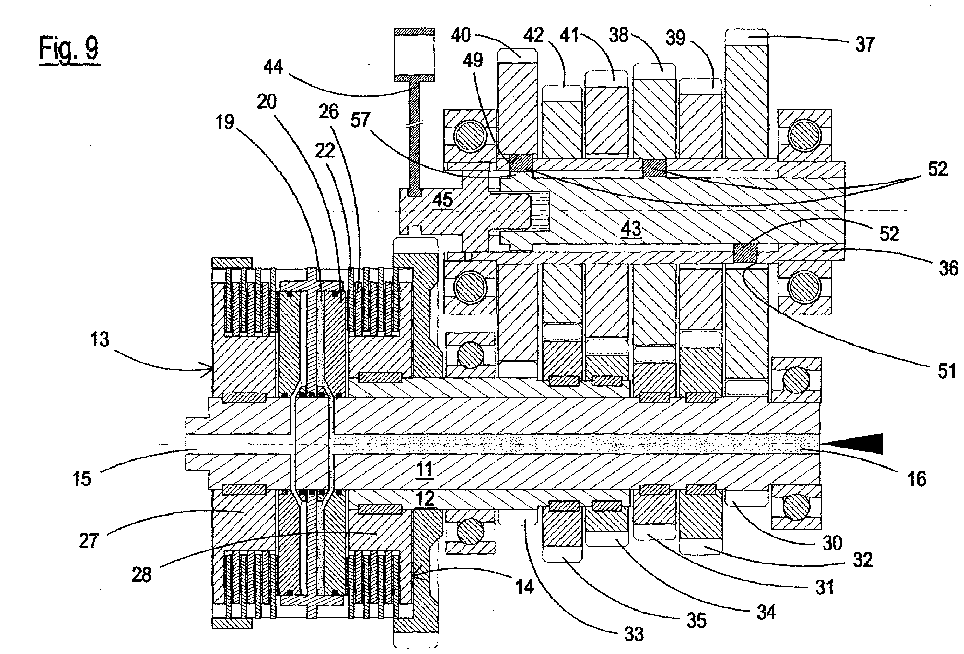

Figure 9 shows a longitudinal sectional view of the even-number gear clutch 13 disengaged and the even-number gear clutch 14 inserted. This is because pressurized oil has only been introduced into the duct 16, which has caused the shifting of the pressure plate 20. The pressure plate 20 moves, through the oil pressure, into the chamber 19 and causes an axial thrust on the two series of drive plates 22 and driven plates 26 allowing, by means of friction, the torque to be transferred to the primary shaft 12 with the insertion and activation of the even-number gear clutch 14.

The three barrels 52 relating to the insertion of the "second"-gear secondary gearing 40 on the secondary shaft 36 which were ready to be raised, are pushed outside their three openings 51 by the interaction of the three surface cams 57 of the cam shaft 43 which are engaged with the extensions 53.

This occurs thanks to the action of the actuator 44 which, by acting on the hub 45, moves it axially for as much as is necessary for causing the rotation of the secondary shaft 36. Also in this case, the rotation is due to the interaction between the grooves 29 and rolls 50.

The lifting of the barrels 52 causes their engagement in the relative seats 49 of the "second"-gear secondary gearing 40 which thus becomes integral with the secondary shaft 36 and receives the movement from the "second"-gear primary gearing 33 positioned on the primary shaft 12 caused to rotate by the even-number gear clutch 14. These barrels 52, inserted in the seats 49, are obviously kept in position by the "second"-gear surface cams 57.

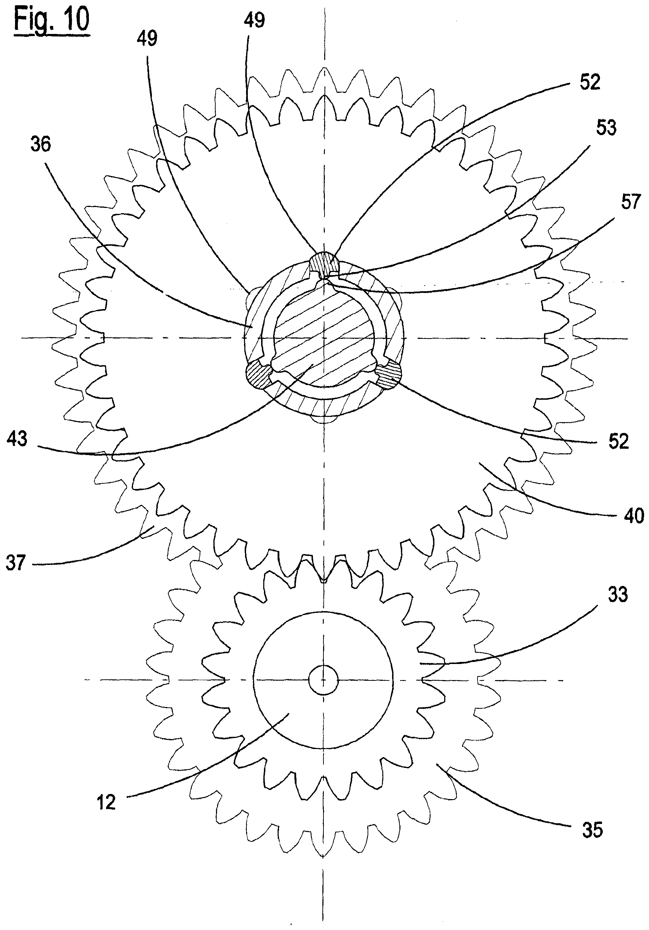

Figure 10 shows the interactions indicated above, so that the "second"-gear primary gearing 33 is operatively engaged with the "second"-gear secondary gearing 40 made integral with the secondary shaft 36 as described above.

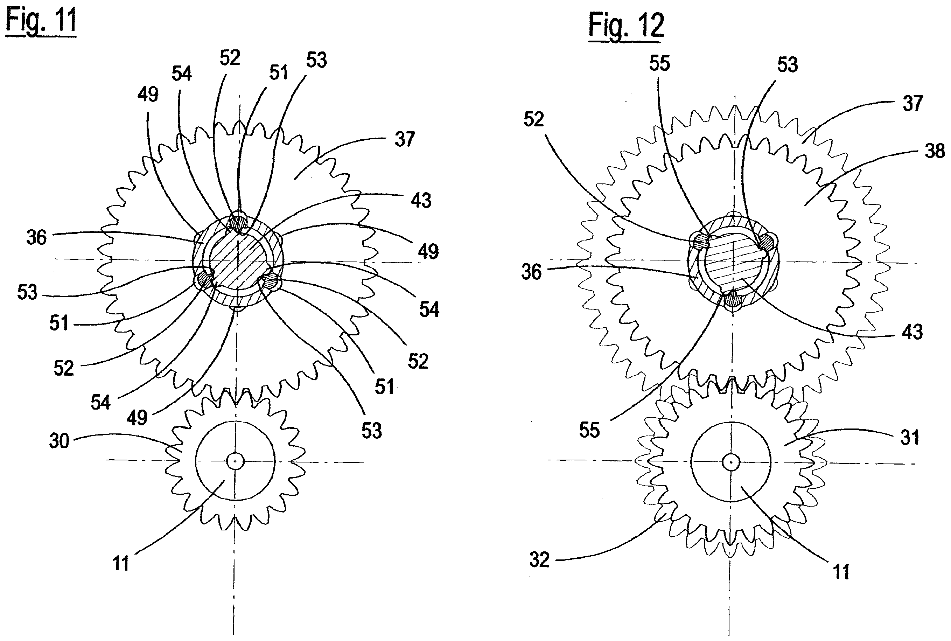

In this situation, moreover, the gearbox of the present invention has the "first" and "third" gear ready to be inserted with a minimum rotation of the cam shaft 43 and figures 11 and 12 show a sectional view of this situation.

The "first"-gear barrels 52 of the "first"-gear secondary gearing 37 situated in the respective seats 51 of the secondary shaft 36 are ready to be raised by a minimum rotation of the cam shaft 43. The surface cams 54 of the cam shaft 43 are positioned laterally alongside the extensions 53 of the barrels 52 situated in the seats 51 of the secondary shaft 36 in correspondence with the "first"-gear secondary gearing 37.

In the same way, with this rotation, the cam shaft 43 is arranged so that the "third"-gear barrels 52 of the "third"-gear secondary gearing 38 situated in the respective seats 51 of the secondary shaft 36 are ready to be raised by a minimum rotation of the cam shaft 43. The surface cams 55 of the cam shaft 43 are positioned laterally alongside the extensions 53 of the barrels 52 situated in the seats 51 of the secondary shaft 36 on the centre-line in correspondence with the "third"-gear secondary gearing 38.

There are therefore two gears ready to be inserted, i.e. the "first" and the "third".

The same considerations can be repeated for the other gears.

In this type of arrangement previously illustrated and described, i.e. in the dual clutch gearboxes of the invention, the two coaxial clutches are exploited.

It is specifically in this dual clutch embodiment that it can be appreciated that, according to the invention, specific barrels and specific cams have been produced, which are suitable for guaranteeing an immediate insertion of the gears in extremely short times.

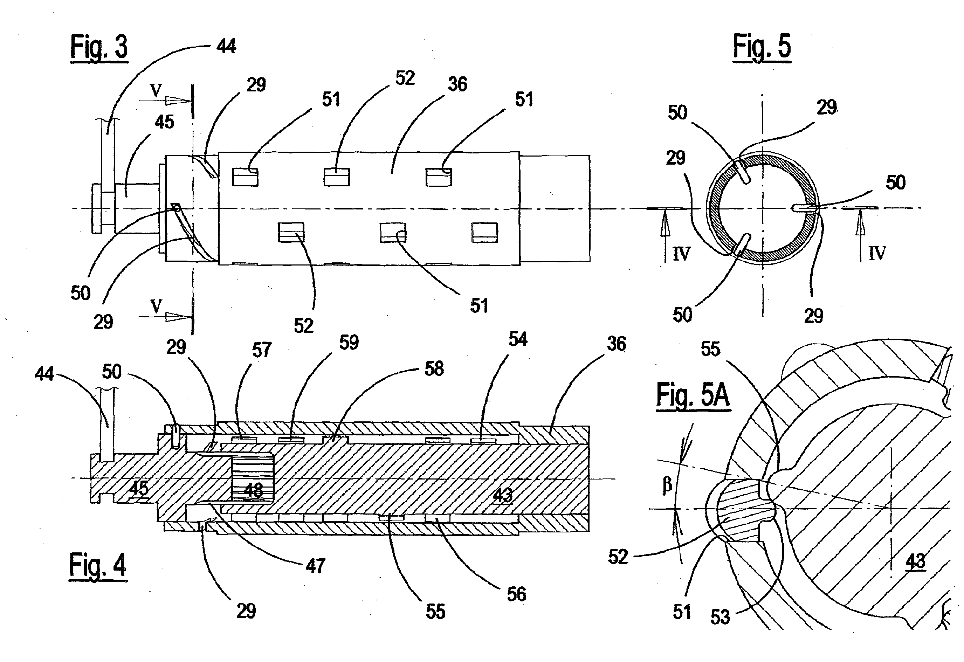

Figure 5A is an enlarged sectional view of a coupling detail between a cam and a barrel in a reciprocal coupling phase.

This figure shows how each barrel 52 has a side with a flat rectangular surface which uniformly rests against an identical surface present in the seat 51 of the shaft 36. The specific pressures are therefore much less high than those of the balls used in the prior art which have a point contact along a line with their specific seat (extremely high specific pressure between ball and seat to the detriment of the resistance of the shaft).

Figure 5A also shows how the rotation necessary for a gear change is reduced to the minimum thanks to the arrangement of at least two cams, or even three cams at 120°, and the particular shape of the barrels 52 and surface cams on the cam shaft 43. In this arrangement, in fact, for obtaining the change of ratio, only half a rotation by an angle β, in the example 12°, is necessary. Thanks to the possible contemporaneous disengagement and respective insertion of the ratios, only 12° are consequently necessary. There could even be up to ten ratios when there are three cams at 120°.

The invention firstly shows how the cams are surface cams protruding radially outwardly with respect to the cylindrical shape of the side surface of the cam shaft 43. The cams 54-59 have a rounded shape at the top and have the shape of a rounded inflection laterally filleted at both sides with respect to the outer surface of the cylindrical cam shaft 43 from which they extend.

In the same way, the barrels 52, as already mentioned, have an extension 53 at the rear, which is radial, rounded, facing the rotation axis of the cam shaft 43 which collaborates with the shape of the cams 54-59.

The profile of the cams 54-59, thanks to the presence of the side inflection which forms the seat of the barrel 52 in rest position, in addition to the rear extensions 53 of the barrels 52, significantly reduce the operating angle β necessary for inserting and disengaging the ratio. This can be clearly seen by contemporaneously observing figures 10, 11 and 12 which show the situation in the sectional position illustrated in figure 9.

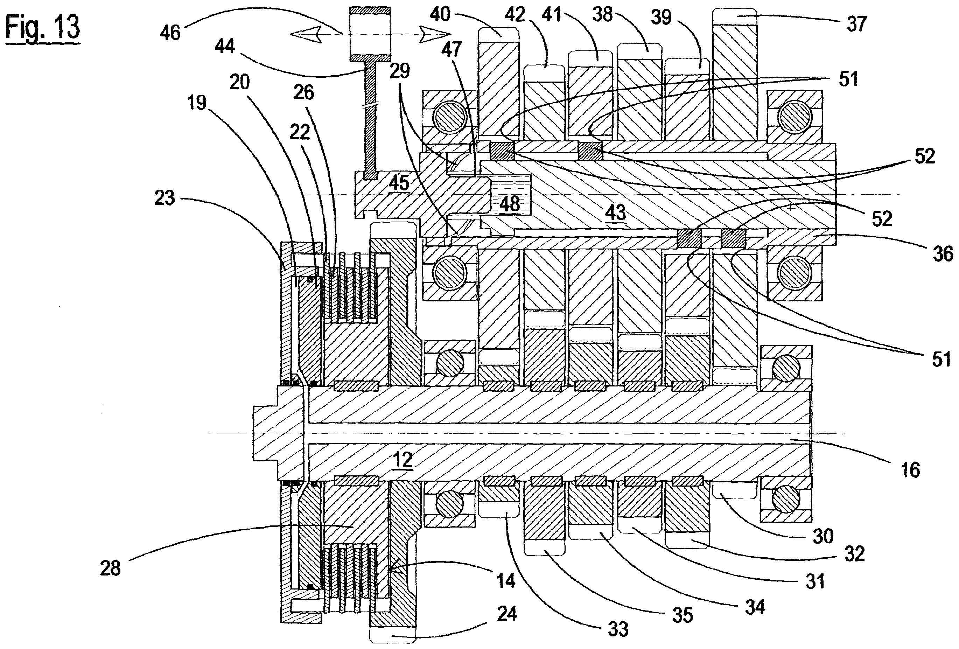

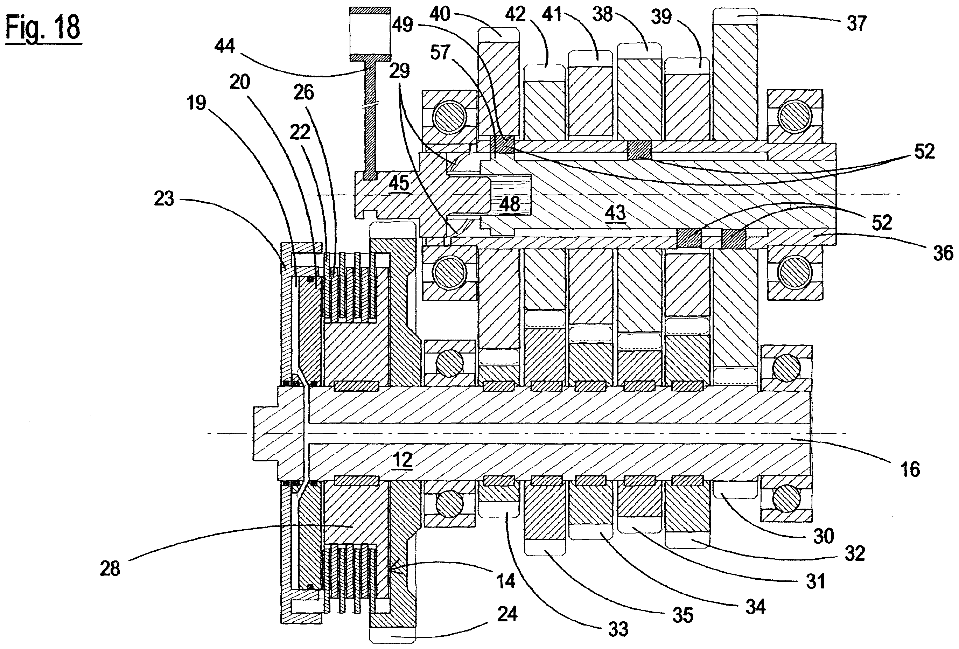

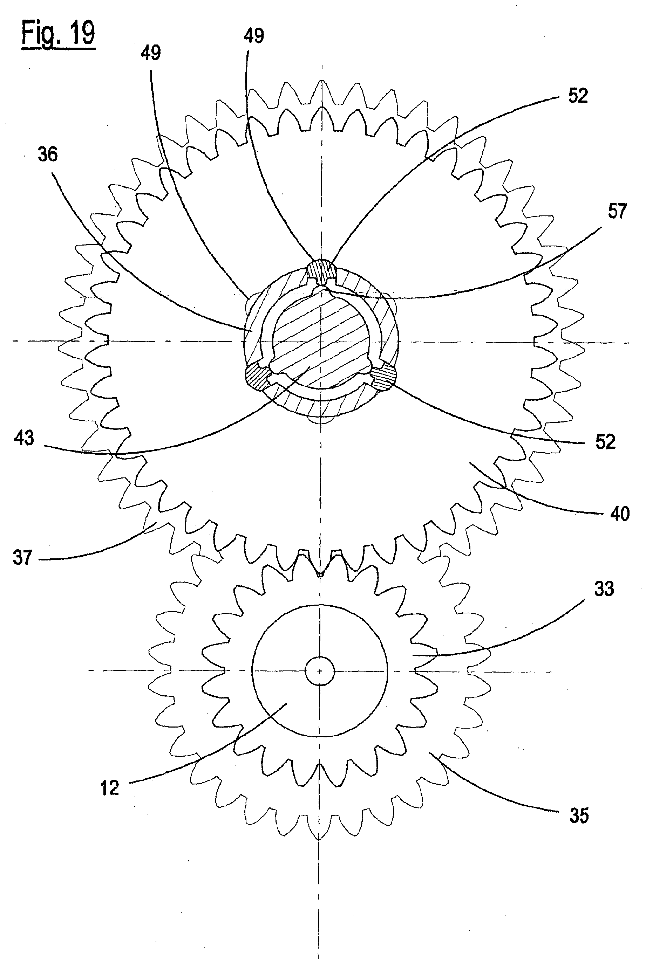

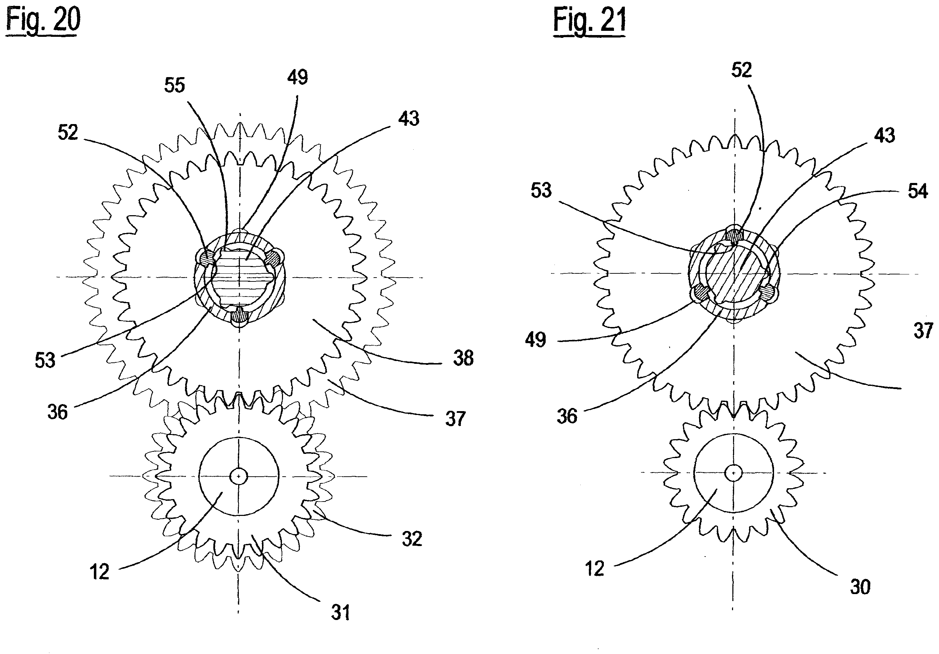

Figures 13 to 21 show an embodiment of the gearbox of the invention, coupled with only one clutch. In the following description, the same reference numbers will be used when possible, for the sake of simplicity.

In this embodiment, the gearbox of the invention comprises only one primary shaft 12 with which a respective clutch 14 is integral, coaxial to the primary shaft 12, positioned in correspondence with an end of the same. The clutch 14 can also be actuated by means of an oil duct 16, positioned axially and radially in the primary shaft 12.

The oil, with a partly axial and partly radial passage in the duct 16 reaches a chamber 19 in which there is a respective flat pressure plate 20.

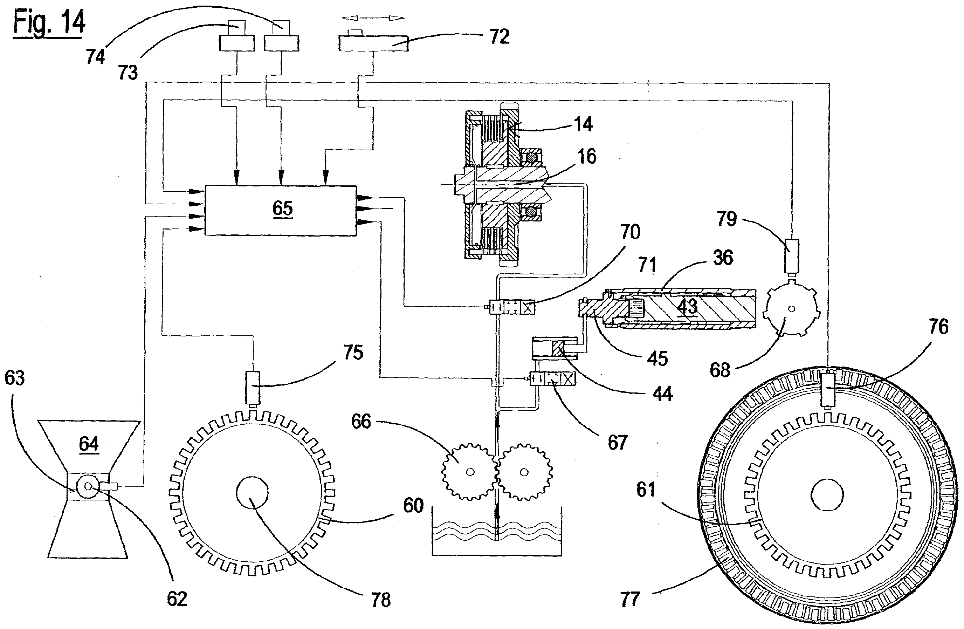

The flat pressure plate 20 is moved axially by the pressure of the oil coming from the duct 16 and controls the compacting of a series of drive plates 22, integral with an outer bell 23, coaxial and in turn integral with a transmission gear 24. This transmission gear 24 receives the rotation movement from a pinion (not shown) which is integral and coaxial with the crankshaft 78 (figure 14). In this way, the movement of the thermal group reaches transmission. A series of driven plates 26, suitable for collaborating with the series of drive plates 22, is constrained to a hub 28, in turn constrained to the primary shaft 12. The passage of the oil in the duct 16 causes the movement of the pressure plate 18 or 20 which causes an axial thrust on the series of drive plates and driven plates 22, 26 allowing the torque to be transferred, by means of friction, to the primary shaft 12.

The primary shaft 11 carries primary gearings 30, 31, 32 of odd-number gears (first, third and fifth) and primary gearings 33, 34, 35 of even-number gears (second, fourth and sixth).

At this point, as for the previous example of figures 1-12, a secondary shaft 36 is envisaged, positioned parallel to the primary shaft 12, which carries the whole series of secondary gearings 37, 38 and 39 of odd-number gears and even-number gears 40, 41 and 42, that can be actuated in engagement with the respective primary gearings 30, 31, 32 of odd-number gears and 33, 34, 35 of even-number gears of the primary shaft 12 through the cam shaft 43.

The cam shaft 43 according to the invention is arranged as shown in the embodiment of figures 1-13.

It should be noted that the surface cams 54, 55, 56, 57, 58, 59, at least one for each odd-number and even-number gear, are always positioned angularly offset in a helical fashion with respect to each other. In this example of figures 13-21 they are angularly offset with respect to each other by an angle α, in the example by 30°. This arrangement allows the cams of only one gear at a time to be brought in correspondence with one of the secondary gearings 37, 38 and 39 of odd-number gears and 40, 41 and 42 of even-number gears, positioned on the secondary shaft 36. It should be repeated that also in this case, both the cam shaft 43 and the secondary shaft 36 rotate coaxially.

Figure 14 shows, for illustrative and non-limiting purposes, a possible management system of a gearbox of the invention combined with a single clutch, which mainly acts in both the starting phase and also for a normal "gear change".

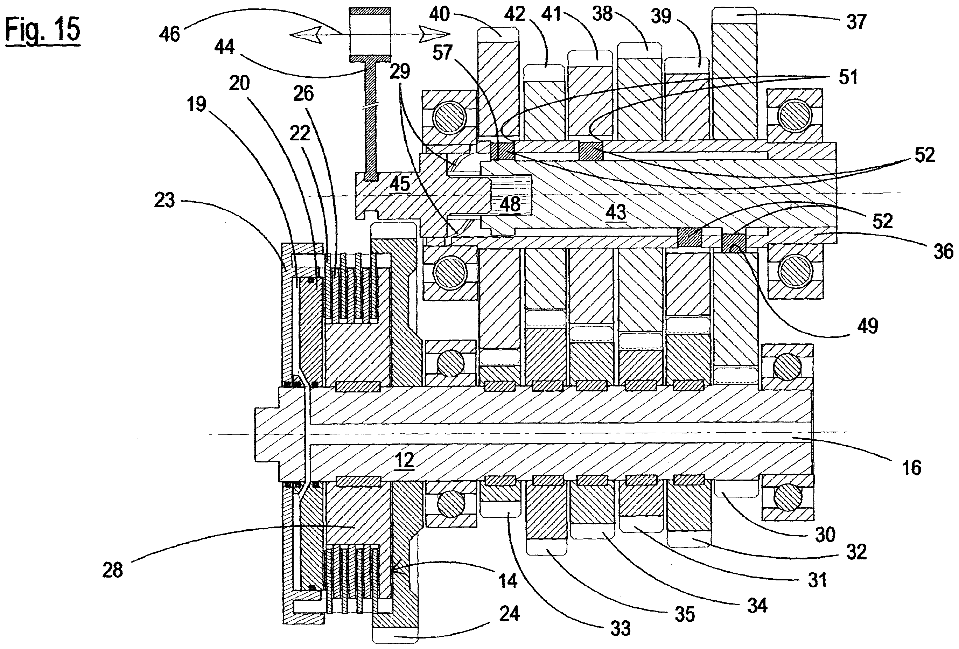

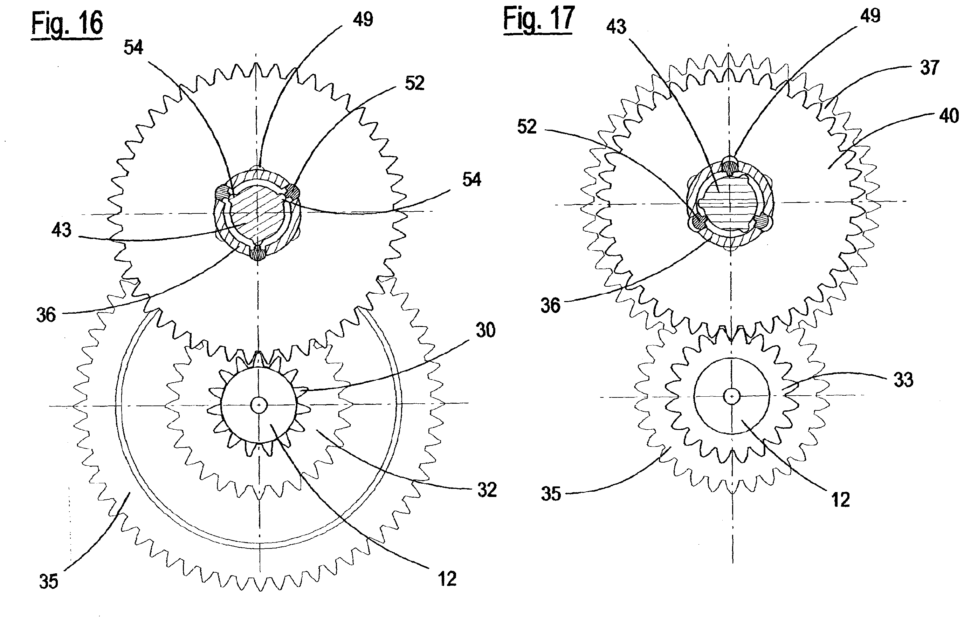

Figures 15 and 16 show the positioning of the parts of the gearbox according to the invention in the single-clutch embodiment in the "first"-gear position inserted in both a longitudinal and transversal section.

Figure 15 shows a longitudinal sectional view of the clutch 14 inserted, as pressurized oil has been introduced into the duct 16, which has caused the movement of the pressure plate 20 and consequent axial thrust on the two series of drive plates 22 and driven plates 26. The friction therefore allows the torque to be transferred to the primary shaft 12. Also in this situation, the three barrels 52 relating to the insertion of the "first"-gear secondary gearing 37 on the secondary shaft 36 have been pushed outside their three openings 51 by the interaction of the three surface cams 54 of the cam shaft 43 which are engaged with the extensions 53.

This occurs thanks to the action of the actuator 44 which, by acting on the hub 45, moves it axially as much as is necessary for causing the rotation of the secondary shaft 36. It should be remembered that this rotation is due to the interaction between the grooves 29 and rolls 50.

The lifting of the barrels 52 causes their engagement in the relative seats 49 of the secondary gearing 37 which is thus made integral with the secondary shaft 36 and receives movement from the primary gearing 30 positioned on the primary shaft 12 caused to rotate by the clutch 14. These barrels 52, inserted in the seats 49, are obviously kept in position by the "first"-gear surface cams 54.

In this case, however, there is naturally only one gear ready for subsequent insertion, i.e. the "second" gear. The "first" gear, in fact, cannot in itself have a previous gear.

Figure 17 shows a sectional view of how this is possible. It can be seen, in fact, that the barrels 52 of the "second"-gear secondary gearing 40 situated in the respective seats 51 of the secondary shaft 36 are ready to be raised with a rotation of the cam shaft 43. The surface cams 57 of the cam shaft 43, in fact, through the rotation of the same, act on the extensions 53 of the barrels 52 positioned in the seats 51 of the secondary shaft 36 in correspondence with the "second"-gear secondary gearing 40.

The subsequent gears are simply inserted by activation due to the action of the actuator 44 which, by acting on the hub 45, moves it axially by as much as is necessary for causing the rotation of the cam shaft 43 and causing the disengagement of the barrels 52 of the "first" gear and the activation of the barrels 52 of the "second" gear. The same activation is effected for each further gear thanks to the appropriate activation of the actuator 44, which also in this case may not only be mechanical but also hydraulic or electric.

In the example shown of a single clutch for having an insertion without jamming and to ensure that a single gear is inserted, the angular offsetting of the cams on the cam shaft 43 should be greater with respect to that previously shown for the case of a dual clutch.

It can thus be seen that in a gearbox according to the present invention, there are numerous advantages and the problems of the known art previously indicated have been solved.

First of all, there is a greater construction simplicity. If on the one hand, in fact, it is true that the "cam shaft" 43 described must be constructed, it is also true, on the other hand, that there are no forks, sliding rods, sliding sleeves, seats and couplings on the gearings, "desmodromic" drum for moving the forks and other elements, with a considerable overall simplification.

Secondly, there is a greater smoothness of the group. The forks of the known groups, in fact, due to construction requirements, never have a perfect orthogonality with respect to the axis of the shafts and therefore inevitably create a loss by sliding friction, between the side walls and seat of the corresponding sliding sleeves. The drastic reduction in friction leads to a greater efficiency of the gearbox group.

Thirdly, there is an extreme axial compactness of the gearshift and clutch group thanks to the inclusion of a "cam shaft" as described above. The sliding couplings of the sleeves and corresponding gearings in the known groups create an axial encumbrance. The present invention, on the contrary, although envisaging a single or "dual clutch" (which inevitably increase the axial encumbrance of the "gearshift and clutch" group), reduces this encumbrance.

The objective specified in the preamble of the description has therefore been achieved.

The forms of the structure for producing a gearbox with reduced encumbrance of the invention, as also the materials and assembly modes, can obviously vary from those shown for purely illustrative and non-limiting purposes in the drawings.

The protection scope of the invention is therefore delimited by the enclosed claims.

## Claims

1. A gearbox comprising a primary shaft (12) carrying primary gearings (30, 31, 32, 33, 34, 35), a secondary shaft (36), parallel to said primary shaft (12), which carries secondary gearings (37, 38, 39) of odd-number gears and secondary gearings (40, 41, 42) of even-number gears which can be activated in engagement with the respective primary gearings (30, 31, 32, 33, 34, 35) of said primary shaft (12) by means of a cam shaft (43) coaxial with said secondary shaft (36),
the cam shaft (43) carrying cams (54, 55, 56, 57, 58, 59) spaced axially and angularly offset in a helical fashion with respect to each other by an angle α, so as to be brought one at a time in correspondence with said secondary gearings (37, 38, 39, 40, 41, 42)
the gearbox further including rotation means (29, 50) of said cam shaft (43) with respect to said secondary shaft (36), and means for the selective engagement (51, 52, 53, 49) between said primary gearings (30, 31, 32, 33, 34, 35) and said secondary gearings (37, 38, 39, 40, 41, 42) due to rotation of said cam shaft (43) with respect to said secondary shaft (36), wherein said rotation is driven by means of an actuator (44),
wherein said selective engagement means between said primary gearings (30, 31, 32, 33, 34, 35) and said secondary gearings (37, 38, 39, 40, 41, 42) consist of barrels (52) slidingly positioned in openings (51) positioned angularly offset in a helical fashion with respect to each other in hollow side walls of said secondary shaft (36) in a complementary position with respect to that of said cams (54, 55, 56, 57, 58, 59) of said cam shaft (43), said barrels (52) being operable by said cams (54, 55, 56, 57, 58, 59) to radially slide,
wherein furthermore each secondary gearing (37, 38, 39, 40, 41, 42) comprises at least one seat (49) for receiving a respective barrel (52) when operated by a respective cam (54, 55, 56, 57, 58, 59),
the gearbox being **characterized in that** each of said cams (54, 55, 56, 57, 58, 59) has a rounded shape at the top and has the shape of a rounded inflection laterally filleted at both sides with respect to an outer surface of the cam shaft (43) from which they extend.

2. The gearbox according to claim 1, **characterized in that** said cams (54, 55, 56, 57, 58, 59) and also said seats (49) are in a number of three for each secondary gearing (37, 38, 39, 40, 41, 42).

3. The gearbox according to claim 1 or 2, **characterized in that** cams (54, 55, 56, 57, 58, 59) are surface cams, radially protruding outwardly from an external surface of said cam shaft (43) which is in cylindrical shape.

4. The gearbox according to any of the previous claims, **characterized in that** each barrel (52) has, in the part facing said cams, a radial extension (53), which is rounded and thinned, facing the rotation axis of the cam shaft (43).

5. The gearbox according to one or more of the previous claims, **characterized in that** said rotation means of said cam shaft (43) with respect to said secondary shaft (36) are respectively at least one helicoidal groove (29) situated in said secondary shaft (36) in which at least one roll (50) is slidingly engaged, which is radially fixed in an extension (45) of said actuator (44).

6. The gearbox according to one or more of the previous claims, **characterized in that** said cam shaft (43) has an external diameter smaller than the internal diameter of the secondary shaft (36) so that it can freely rotate with its cams (54, 55, 56, 57, 58, 59), radially directed outwardly, inside an internal cavity of the secondary shaft (36).
